# EUROPEAN PATENT SPECIFICATION

(11) **EP 3 247 048 B1**
(45) Date of publication and mention of the grant of the patent: **19.05.2021**
(21) Application number: 15877542.9
(22) Date of filing: 12.06.2015
(51) Int. Cl.: H04B 5/00, H04L 29/08, H04W 4/18, H04W 4/80

(54) **SYSTEM AND METHOD FOR EMBEDDED OPERATING SYSTEM ACHIEVING BLUETOOTH SLAVE DEVICE FUNCTION**
SYSTEM UND VERFAHREN FÜR EIN EINGEBETTETES BETRIEBSSYSTEM MIT DURCHFÜHRUNG DER FUNKTION EINER BLUETOOTH-SLAVE-VORRICHTUNG
SYSTÈME ET PROCÉDÉ POUR SYSTÈME D'EXPLOITATION INTÉGRÉ RÉALISANT UNE FONCTION DE DISPOSITIF ESCLAVE BLUETOOTH

(30) Priority: 12.01.2015 CN 201510014816
(43) Date of publication of application: 22.11.2017
(73) Proprietor: Yutou Technology (Hangzhou) Co., Ltd., Hangzhou City, Zhejiang 311199 (CN)
(72) Inventor: SHI, Jiaqi, Hangzhou Zhejiang 311199 (CN)
(74) Representative: Gallego Jiménez, José Fernando
(86) International application number: PCT/CN2015/081393
(87) International publication number: WO 2016/112626

(56) References cited:
- WO-A1-2004/034601
- CN-A- 101 141 628
- CN-U- 202 750 089
- CN-U- 204 013 536
- US-A1- 2007 028 018
- US-B2- 7 127 541

## Description

### BACKGROUND OF THE INVENTION

### 1. Field of the Invention

The invention relates to a field of communication technology, especially to an embedded operating system for achieving Bluetooth slave device function and the method thereof.

### 2. Description of the Related Art

With the development of the wireless communication technology and the expansion of market size, Bluetooth technology is being applied more broadly and involving more and more people. From cell phones to the smart home, from the sensor network to home service robots, Bluetooth technology has been widely utilized in a wide variety of applications and devices.

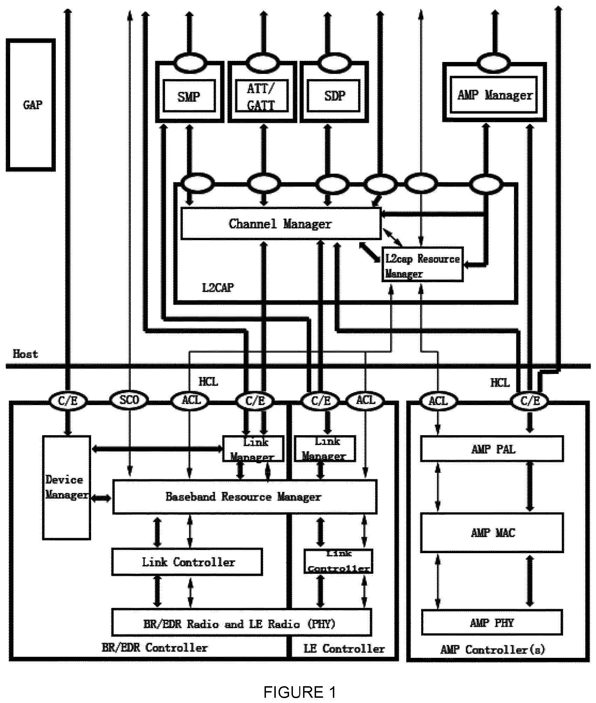

Bluetooth technology is a short distance wireless transmission technology, which can solve communication problems among identical devices or different devices such as cell phones, computers, sensors and even robots. Bluetooth Protocol and Profile are important parts of Bluetooth technology, wherein Bluetooth Protocol defines the communication mode between it and other systems (protocols), and describes the signal timing and the communication data agency; wherein Bluetooth Profile, directing at some applications and particular scenarios, defines protocols being adopted by these scenarios and the task sequence of various protocols, so as to ensure the interactive operability among devices. Most of the Bluetooth Profiles classify the device as the master device and the slave device. For example, Bluetooth Advanced Audio Distribution Profile (A2DP) implementing audio distribution profile model classifies the device as the master device (SRC) and the slave device (SNK), wherein the audio stream sender is SRC, and the receiver is SNK. At present, all the cell phones and tablet PCs have achieved the master device (SRC) in A2DP, these devices based on IOS or Android intelligent operating system, utilize Bluetooth Protocol Stack of the operating system itself to implement the master device (SRC) defined in the profile. With respect to the device, based on Android intelligent operating system, Protocol Stack could be Bluz or Bluedroid. These Protocol Stack software have achieved many profiles of Bluetooth, and their architectures are shown in Figure 1.

However, as shown in Figure 1, because the operating system manufacturer underestimates application scenarios of intelligent devices, the majority of profiles (such as HFP, A2DP, AVRCP) in Bluetooth Protocol Stack of the embedded operating system, such as Linux, Android and so on, do not include the slave device function. At present, the domestic and overseas intelligent devices based on an embedded operating system, such as cell phones, tablet PCs, smart TVs, the smart home and so on, could only achieve the master device function of these profiles. Bluetooth devices configured in the intelligent devices only include some basic Bluetooth protocols, and the upper layer protocol and profile is implemented in the operating system. With the development of robot technology, some robots, based on an embedded operating system like embedded Linux, Android and others, need the slave device function of the profile, such as A2DP, HFP, AVRCP and so on, therefore, the industry needs to implement the technical measures of the embedded operating system achieving Bluetooth slave device.

US Patent No. 7,127,541 B2 and US Patent Application No. 2007/028018 A1 describe embedded operating systems for achieving Bluetooth slave device.

### SUMMARY OF THE INVENTION

The invention is defined by the independent claims. Preferred embodiments are defined in the dependent claims.

### BRIEF DESCRIPTIONS OF THE DRAWINGS

Figure 1 is an architecture diagram of the protocol stack of the Bluetooth software in the art;
Figure 2 is a system principle diagram of the present invention;
Figure 3 is a model diagram of the 4 layers of software and hardware interface specification of the interface module according to the invention;
Figure 4 is a driver architecture diagram of an embodiment based on Android intelligent operating system;

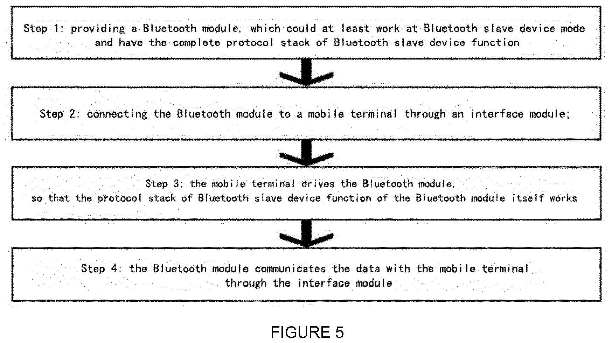

Figure 5 is a flow chart of the method of the invention.

### DETAILED DESCRIPTIONS

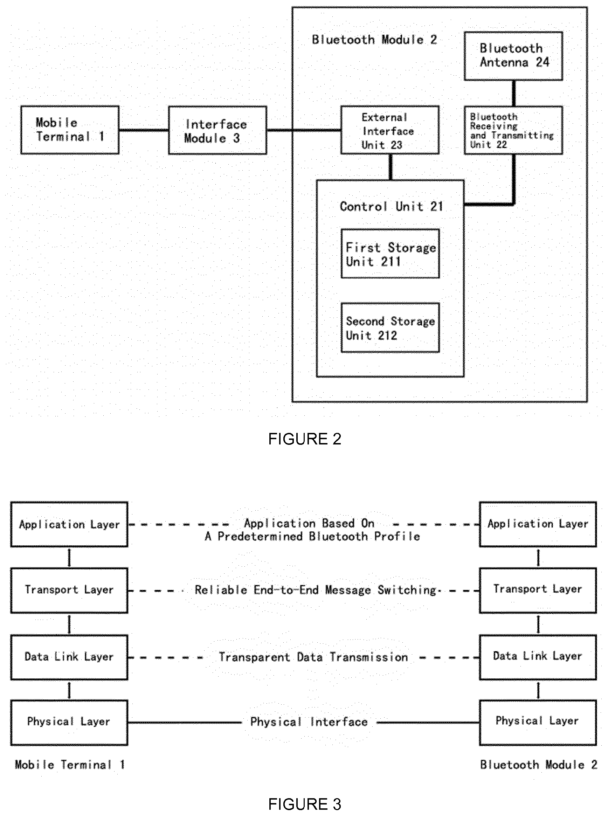

The following is a further description of the invention, whose scope is defined by the appended claims. As shown in Figure 2, the technical solution of the present invention comprises a system as claimed in claim 1. Preferred embodiments are covered in the corresponding dependent claims.

In the above technical solution, with an external Bluetooth module 2, which, at minimum, works in Bluetooth slave device mode, it can make the mobile terminal 1 communicate with the external Bluetooth master device in slave device mode, the Bluetooth module 2 communicates with the mobile terminal 1 through the interface module 3, driving the Bluetooth module 2 working by the mobile terminal 1.

The Bluetooth module 2 comprises: a control unit 21; a Bluetooth receiving and transmitting unit 22, connected to the control unit 21; an external interface unit 23, respectively connected to the control unit 21 and the interface module 3; a Bluetooth antenna 24, connected to the Bluetooth receiving and transmitting unit 22.

The control unit 21 is connected to the mobile terminal through the external interface unit, and is configured, according to the instructions from the mobile terminal, to control the Bluetooth receiving and transmitting unit 22 to communicate with the mobile terminal 1 through the external interface unit 23. At the same time, under the control of the control unit 21, the Bluetooth receiving and transmitting unit 22 communicates with external Bluetooth master device in the form of Bluetooth slave device, and the Bluetooth antenna 24 is used to transmit and receive radio signals.

The control unit 21 comprises:
A first storage unit 211, applied to storing the complete protocol stack of Bluetooth slave device function, said complete protocol stack of Bluetooth slave device function is used to control the work of the Bluetooth receiving and transmitting unit 22;
A second storage unit 212, responsible for storing the interface protocol stack; said interface protocol stack is used to allow communication between the Bluetooth module 2 and the mobile terminal 1.

In a preferable embodiment, the control unit 21 could be formed by a single chip micyoco with low power consumption. The protocol stack of Bluetooth slave device function could be developed in the single chip micyoco, written in C language, which would form the first storage unit 211 with the storage space of the single chip micyoco. Additionally, the second storage unit 212 could also be formed in the storage space of the single chip micyoco, which can store drivers and the interface protocol stack of the external interface unit 23.

Through the Bluetooth receiving and transmitting unit 22, the Bluetooth module 2 receives the Bluetooth data packets from the Bluetooth antenna 24, after treatment of the protocol stack in the control unit 21, transmits the data to the mobile terminal 1, or receives the data from the mobile terminal 1 then encapsulating as Bluetooth data packets, transmitting to the Bluetooth receiving and transmitting unit 22 through the Bluetooth antenna 24.

Preferably, the external interface unit 23 and the interface module 3 are serial interfaces. As a preferable embodiment, the external interface unit 23 could employ a Universal Asynchronous Receiver and Transmitter (UART), or a Serial Peripheral Interface (SPI), or an Inter-Integrated Circuit (I2C), or a Serial Rapid Input Output (SRIO).

In the above technical solution, the software and hardware interface profile of the interface module 3 is a bridge, which connects the Bluetooth module 2 with the mobile terminal 1. The profile could be a specific hardware communication interface in the hardware and be a layer of communication protocol stack within the software The protocol stack defines the data packet format and transfer timing between the Bluetooth module 2 and the mobile terminal 1. As shown in Figure 3, the protocol stack consists of 4 layers, which are the application layer, the transport layer, the data link layer and the physical layer, respectively. The application layer serves the application program directly, specifically orienting some definite Bluetooth profile application to formulate the data packet format and transfer timing. The transport layer takes charge of transmission and the control of data, thus providing a dependable data exchanging function in end-to-end service. The function of the data link layer is to provide the upper layer with transparent data transmission in basic services. The physical layer defines supplied mechanical, electrical, functional, and normative features, based on creation, maintenance, and removal of the physical link, required in data transmission. In a more preferable embodiment, the interface module 3 can be configured inside the mobile terminal 1, consisting of the software and hardware of the mobile terminal 1.

In the above technical solution, the mobile terminal 1 further comprises a driver of an embedded operating system, the driver runs inside the operating system of the mobile terminal 1, which specifically takes charge of receiving the requirements of the application program, encapsulating the requirements into the data packet, then transmitting them to the Bluetooth module 2 through the interface module 3, or receiving the notice from the Bluetooth module 2 and sending the notice to upper layer application running in the mobile terminal 1.

In a preferable embodiment, in an intelligent robot based on Android embedded operating system, the intelligent robot needs to have the functions of Bluetooth phone and Bluetooth music. First, a user uses the cell phone to make Bluetooth pairing with the robot, the user then can interact with the robot, commanding the robot to make calls or play music in the cell phone via Bluetooth. In this case, the robot needs to have the slave device function of Bluetooth profile such as A2DP, HFP, AVRCP.

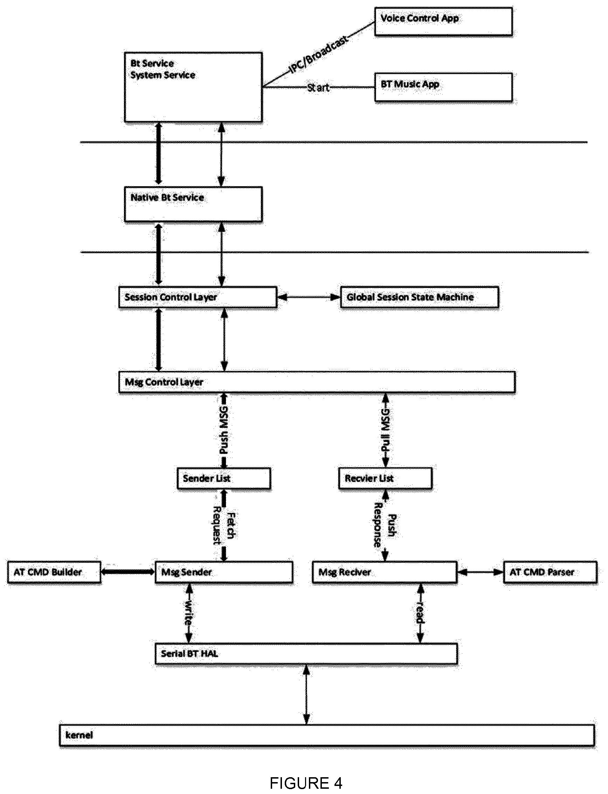

At present, traditional Android embedded operating system does not support the slave device function. After employing the system, according to the present invention, the intelligent robot is an embodiment of mobile terminal 1 in the above technical solution, in this case, it does not have Android native Bluetooth protocol stack, and could use the protocol stack in the Bluetooth module 2, wherein the protocol stack in the Bluetooth module 2 includes complete A2DP, HFP, AVRCP Bluetooth slave device function. Now, using the serial interface (namely the embodiment of interface module 3) as the communication interface connecting the mobile terminal 1 with the Bluetooth module 2, achieving the driver and service based on Android as shown in Figure 4. So the robot can achieve the function of making calls or playing music by Bluetooth.

Take the phone call, as an example, for demonstrating its workflow: at first, a user commands a robot to make calls, and the robot invokes application after receiving the command, the application encapsulates contents of the command into data packets according to the model in Figure 3, then transmits data packets to the Bluetooth module 2; the Bluetooth module 2 unpacks data packets, then executes the phone call process prescribed in HFP through the Bluetooth protocol stack, thus achieving the function of calling Bluetooth phone.

The operating system may be Android or Linux.

The technical solution in the present invention further addresses a method as in claim 4. Preferred embodiments are covered by the corresponding dependent claims.

Preferably, the interface module is a serial interface.

The mobile terminal employs an operating system, which is Android or Linux.

In conclusion, using the device described above, which makes the present invention different from the current solution, which has the Bluetooth protocol stack software integrated within the inside of the operating system. The invention utilizes extra hardware to implement and handle the Bluetooth protocol stack, then associates the Bluetooth profile, intelligent devices required, which is the complete external Bluetooth protocol stack, including master-slave devices, with the embedded operating system in mobile terminal through the software and hardware interface, thus achieving the supporting function of adding Bluetooth slave devices to the operating system without modifying the source code of the existing embedded operating system; meanwhile, the invention does not couple with the operating system, having portability, with which it can be easily transplanted into various embedded operating systems after the completion of a Bluetooth protocol stack, even into a closed-source operating system, thus without a Bluetooth protocol stack affected by the interface and the service of the operating system any more, improving extensibility and flexibility of the entire system.

## Claims

1. A Bluetooth slave device function system based on an embedded operating system, comprising:
a mobile terminal (1), provided with an embedded intelligent operating system; the mobile terminal is an intelligent robot based on Android embedded operating system;
a Bluetooth module (2), configured to at least work in a Bluetooth slave device mode;
an interface module (3), connecting the Bluetooth module (2) and the mobile terminal (1);
wherein, the mobile terminal (1) drives the Bluetooth module (2) to operate through the interface module (3); wherein the Bluetooth module (2) comprises:
a control unit (21);
a Bluetooth receiving and transmitting unit (22), connected to the control unit(21);
an external interface unit (23), respectively connected to the control unit (21) and the interface module (3);
a Bluetooth antenna (24), connected to the Bluetooth receiving and transmitting unit (22);
wherein, the control unit (21) is connected to the mobile terminal(1) through the external interface unit (23), and is configured, according to the instructions from the mobile terminal (1), to control the Bluetooth receiving and transmitting unit (22) to communicate with the mobile terminal(1) through the external interface unit (23); and
wherein the control unit (21) comprises:
a first storage unit (211), configured to store the complete protocol stack of the Bluetooth slave device function, wherein the complete protocol stack includes Advanced Audio Distribution Profile, A2DP, Hands-Free Profile, HFP, or Audio/Video Remote Control Profile, AVRCP, Bluetooth slave device function, said complete protocol stack of Bluetooth slave device function being configured to control the operation of the Bluetooth receiving and transmitting unit (22);
a second storage unit (212), configured to store the interface protocol stack, said interface protocol stack being configured for communication between the Bluetooth module (2) and the mobile terminal (1);
wherein the first storage unit (211) and the second storage unit(212) are formed in the storage space of a single chip; and wherein through the Bluetooth receiving and transmitting unit (22), the Bluetooth module (2) receives the Bluetooth data packets from the Bluetooth antenna (24), after treatment of the protocol stack in the control unit (21), transmits the data to the mobile terminal (1), or receives the data from the mobile terminal (1) then encapsulating as Bluetooth data packets, transmitting to the Bluetooth receiving and transmitting unit (22) through the Bluetooth antenna (24);
the mobile terminal (1) further comprises a driver of an embedded operating system, the driver runs inside the operating system of the mobile terminal (1), which specifically takes charge of receiving requirements of an application program, encapsulating the requirements into the data packet, then transmitting them to the Bluetooth module (2) through the interface module (3), or receiving a notice from the Bluetooth module (2) and sending the notice to upper layer application running in the mobile terminal (1);
under the control of the control unit (21), the Bluetooth receiving and transmitting unit (22) are configured to communicate with an external Bluetooth master device in the form of Bluetooth slave device, thereby making the mobile terminal (1) communicate with an external Bluetooth master device in slave device mode.

2. The system as claimed in Claim 1, wherein the external interface unit (23) and the interface module (3) are serial interfaces.

3. The system as claimed in Claim 2, wherein the serial interfaces could be serial asynchronous interfaces, serial peripheral interfaces, internal integration bus or the serial fast input and output interface.

4. A method for using an embedded operating system to achieve Bluetooth slave device function, comprising:
Step 1: providing a Bluetooth module (2), the Bluetooth module (2), at minimum, being configured to work in Bluetooth slave device mode and to have complete protocol stack of the Bluetooth slave device function stored in a first storage unit (211);
Step 2: connecting the Bluetooth module to a mobile terminal (1) through an interface module (3), the mobile terminal (1) is an intelligent robot based on Android embedded operating system;
Step 3: the mobile terminal (1) drives the Bluetooth module (2) to operate the Bluetooth module's own protocol stack of Bluetooth slave device function;
Step 4: the Bluetooth module (2) conducts data communication with the mobile terminal (1) through the interface module (3), wherein the interface protocol stack is stored in a second storage unit (212) of the Bluetooth module (2), wherein the first storage unit (211) and the second storage unit (212) are formed in the storage space of a single chip;
wherein through the Bluetooth receiving and transmitting unit (22), the Bluetooth module (2) receives the Bluetooth data packets from the Bluetooth antenna (24), after treatment of the protocol stack in the control unit (21), transmits the data to the mobile terminal (1), or receives the data from the mobile terminal (1) then encapsulating as Bluetooth data packets, transmitting to the Bluetooth receiving and transmitting unit (22) through the Bluetooth antenna (24);
the mobile terminal (1) further comprises a driver of an embedded operating system, the driver runs inside the operating system of the mobile terminal (1), which specifically takes charge of receiving requirements of an application program, encapsulating the requirements into the data packet, then transmitting them to the Bluetooth module (2) through the interface module (3), or receiving a notice from the Bluetooth module (2) and sending the notice to upper layer application running in the mobile terminal (1);
under the control of the control unit (21), the Bluetooth receiving and transmitting unit (22) communicate with an external Bluetooth master device in the form of Bluetooth slave device, thereby making the mobile terminal (1) communicate with an external Bluetooth master device in slave device mode;
wherein the complete protocol stack includes Advanced Audio Distribution Profile, A2DP, Hands-Free Profile, HFP, or Audio/Video Remote Control Profile, AVRCP, Bluetooth slave device function.

5. The method as claimed in Claim 4, wherein the interface module is a serial interface.

## Patentansprüche

1. Bluetooth-Slave-Vorrichtungsfunktionssystem, das auf einem eingebetteten Betriebssystem basiert, umfassend:
ein mobiles Endgerät (1), das mit einem eingebetteten intelligenten Betriebssystem bereitgestellt ist; wobei das mobile Endgerät ein intelligenter Roboter basierend auf einem in Android eingebetteten Betriebssystem ist;
ein Bluetooth-Modul (2), das konfiguriert ist, um mindestens in einem Bluetooth-Slave-Vorrichtungsmodus zu arbeiten; ein Schnittstellenmodul (3), welches das Bluetooth-Modul (2) und das mobile Endgerät (1) verbindet;
wobei das mobile Endgerät (1) das Bluetooth-Modul (2) ansteuert, um über das Schnittstellenmodul (3) betrieben zu werden;
wobei das Bluetooth-Modul (2) umfasst:
eine Steuereinheit (21);
eine Bluetooth-Empfangs- und Sendeeinheit (22), die mit der Steuereinheit (21) verbunden ist;
eine externe Schnittstelleneinheit (23), die jeweils mit der Steuereinheit (21) und dem Schnittstellenmodul (3) verbunden ist;
eine Bluetooth-Antenne (24), die mit der Bluetooth-Empfangs- und Sendeeinheit (22) verbunden ist;
wobei die Steuereinheit (21) über die externe Schnittstelleneinheit (23) mit dem mobilen Endgerät (1) verbunden ist und gemäß den Anweisungen des mobilen Endgeräts (1) konfiguriert ist, um die Bluetooth-Empfangs- und Sendeeinheit (22) zu steuern, um mit dem mobilen Endgerät (1) über die externe Schnittstelleneinheit (23) zu kommunizieren; und
wobei die Steuereinheit (21) umfasst:
eine erste Speichereinheit (211), die konfiguriert ist, um den vollständigen Protokollstapel der Bluetooth-Slave-Vorrichtungsfunktion zu speichern, wobei der vollständige Protokollstapel ein erweitertes Audioverteilungsprofil, A2DP, ein Freisprechprofil, HFP oder ein Audio-/ Video-Fernsteuerungsprofil, AVRCP, eine Bluetooth-Slave-Vorrichtungsfunktion einschließt, wobei der vollständige Protokollstapel der Bluetooth-Slave-Vorrichtungsfunktion konfiguriert ist, um den Betrieb der Bluetooth-Empfangs- und Sendeeinheit (22) zu steuern;
eine zweite Speichereinheit (212), die konfiguriert ist, um den Schnittstellenprotokollstapel zu speichern, wobei der Schnittstellenprotokollstapel für die Kommunikation zwischen dem Bluetooth-Modul (2) und dem mobilen Endgerät (1) konfiguriert ist;
wobei die erste Speichereinheit (211) und die zweite Speichereinheit (212) in dem Speicherraum eines einzelnen Chips gebildet sind; und
wobei über die Bluetooth-Empfangs- und Sendeeinheit (22) das Bluetooth-Modul (2) die Bluetooth-Datenpakete von der Bluetooth-Antenne (24) nach Behandlung des Protokollstapels in der Steuereinheit (21) empfängt und die Daten an das mobile Endgerät (1) sendet oder die Daten vom mobilen Endgerät (1) empfängt und dann als Bluetooth-Datenpakete einkapselt, Übertragen an die Bluetooth-Empfangs- und Sendeeinheit (22) über die Bluetooth-Antenne (24);
wobei das mobile Endgerät (1) ferner einen Treiber eines eingebetteten Betriebssystems umfasst, wobei der Treiber innerhalb des Betriebssystems des mobilen Endgeräts (1) ausgeführt wird, das speziell für den Empfang der Anforderungen eines Anwendungsprogramms zuständig ist und die Anforderungen in das Datenpaket einkapselt, dann Übertragen davon an das Bluetooth-Modul (2) über das Schnittstellenmodul (3) oder Empfangen einer Benachrichtigung vom Bluetooth-Modul (2) und Senden der Benachrichtigung an eine Anwendung der oberen Schicht, die im mobilen Endgerät (1) ausgeführt wird;
wobei unter der Steuerung der Steuereinheit (21) die Bluetooth-Empfangs- und Sendeeinheit (22) konfiguriert sind, um mit einer externen Bluetooth-Master-Vorrichtung in Form einer Bluetooth-Slave-Vorrichtung zu kommunizieren, wodurch das mobile Endgerät (1) mit einer externen Bluetooth-Master-Vorrichtung im Slave-Vorrichtungsmodus zur Kommunikation veranlasst wird.

2. System nach Anspruch 1, wobei die externe Schnittstelleneinheit (23) und das Schnittstellenmodul (3) serielle Schnittstellen sind.

3. System nach Anspruch 2, wobei die seriellen Schnittstellen serielle asynchrone Schnittstellen, serielle Peripherieschnittstellen, ein interner Integrationsbus oder die serielle schnelle Eingangs- und Ausgangsschnittstelle sein können.

4. Verfahren zur Verwendung eines eingebetteten Betriebssystems zum Erreichen der Bluetooth-Slave-Vorrichtungsfunktion, umfassend:
Schritt 1: Bereitstellen eines Bluetooth-Moduls (2), wobei das Bluetooth-Modul (2) mindestens konfiguriert ist, um im Bluetooth-Slave-Vorrichtungsmodus zu arbeiten und um einen vollständigen Protokollstapel der Bluetooth-Slave-Vorrichtungsfunktion in einer ersten Speichereinheit (211) gespeichert zu haben;
Schritt 2: Verbinden des Bluetooth-Moduls mit einem mobilen Endgerät (1) über ein Schnittstellenmodul (3), wobei das mobile Endgerät (1) ein intelligenter Roboter ist, der auf einem in Android eingebetteten Betriebssystem basiert;
Schritt 3: Ansteuern des Bluetooth-Moduls (2) durch das mobile Endgerät (1), um den eigenen Protokollstapel der Bluetooth-Slave-Vorrichtungsfunktion des Bluetooth-Moduls zu betreiben;
Schritt 4: Durchführen einer Datenkommunikation mit dem mobilen Endgerät (1) über das Schnittstellenmodul (3) durch das Bluetooth-Modul (2), wobei der Schnittstellenprotokollstapel in einer zweiten Speichereinheit (212) des Bluetooth-Moduls (2) gespeichert ist, wobei die erste Speichereinheit (211) und die zweite Speichereinheit (212) in dem Speicherraum eines einzelnen Chips gebildet sind;
wobei über die Bluetooth-Empfangs- und Sendeeinheit (22) das Bluetooth-Modul (2) die Bluetooth-Datenpakete von der Bluetooth-Antenne (24) nach Behandlung des Protokollstapels in der Steuereinheit (21) empfängt und die Daten an das mobile Endgerät (1) sendet oder die Daten vom mobilen Endgerät (1) empfängt und dann als Bluetooth-Datenpakete einkapselt, Übertragen an die Bluetooth-Empfangs- und Sendeeinheit (22) über die Bluetooth-Antenne (24); wobei das mobile Endgerät (1) ferner einen Treiber eines eingebetteten Betriebssystems umfasst, wobei der Treiber innerhalb des Betriebssystems des mobilen Endgeräts (1) ausgeführt wird, das speziell für den Empfang der Anforderungen eines Anwendungsprogramms zuständig ist und die Anforderungen in das Datenpaket einkapselt, dann Übertragen davon an das Bluetooth-Modul (2) über das Schnittstellenmodul (3) oder Empfangen einer Benachrichtigung vom Bluetooth-Modul (2) und Senden der Benachrichtigung an eine Anwendung der oberen Schicht, die im mobilen Endgerät (1) ausgeführt wird; wobei unter der Steuerung der Steuereinheit (21) die Bluetooth-Empfangs- und Sendeeinheit (22) mit einer externen Bluetooth-Master-Vorrichtung in Form einer Bluetooth-Slave-Vorrichtung kommunizieren, wodurch das mobile Endgerät (1) mit einer externen Bluetooth-Master-Vorrichtung im Slave-Vorrichtungsmodus zur Kommunikation veranlasst wird;
wobei der vollständige Protokollstapel ein erweitertes Audioverteilungsprofil, A2DP, ein Freisprechprofil, HFP oder ein Audio-/ Video-Fernsteuerungsprofil, AVRCP, eine Bluetooth-Slave-Vorrichtungsfunktion einschließt.

5. Verfahren nach Anspruch 4, wobei das Schnittstellenmodul eine serielle Schnittstelle ist.

## Revendications

1. Système de fonction de dispositif esclave Bluetooth basé sur un système d'exploitation intégré, comprenant :
un terminal mobile (1), pourvu d'un système d'exploitation intelligent intégré ; le terminal mobile est un robot intelligent basé sur le système d'exploitation intégré Android ;
un module Bluetooth (2), configuré pour au moins travailler dans un mode dispositif esclave Bluetooth ;
un module d'interface (3), connectant le module Bluetooth (2) et le terminal mobile (1) ;
dans lequel, le terminal mobile (1) pilote le module Bluetooth (2) pour qu'il fonctionne par le biais du module d'interface (3) ;
dans lequel le module Bluetooth (2) comprend :
une unité de commande (21) ;
une unité de réception et d'émission Bluetooth (22), connectée à l'unité de commande (21) ;
une unité d'interface externe (23), respectivement connectée à l'unité de commande (21) et au module d'interface (3) ;
une antenne Bluetooth (24), connectée à l'unité de réception et d'émission Bluetooth (22) ;
dans lequel, l'unité de commande (21) est connectée au terminal mobile (1) par le biais de l'unité d'interface externe (23) et est configurée, selon les instructions du terminal mobile (1), pour commander l'unité de réception et d'émission Bluetooth (22) pour qu'elle communique avec le terminal mobile (1) par le biais de l'unité d'interface externe (23) ; et
dans lequel l'unité de commande (21) comprend :
une première unité de stockage (211), configurée pour stocker la pile de protocoles complète de la fonction de dispositif esclave Bluetooth, dans lequel la pile de protocoles complète inclut un profil de distribution audio avancé, A2DP, Profil mains libres, HFP, ou Profil de commande à distance audio/vidéo, AVRCP,
fonction de dispositif esclave Bluetooth, ladite pile de protocoles complète de la fonction de dispositif esclave Bluetooth étant configurée pour commander le fonctionnement de l'unité de réception et d'émission Bluetooth (22) ;
une deuxième unité de stockage (212), configurée pour stocker la pile de protocoles d'interface, ladite pile de protocoles d'interface étant configurée pour une communication entre le module Bluetooth (2) et le terminal mobile (1) ; dans lequel la première unité de stockage (211) et la deuxième unité de stockage (212) sont formées dans l'espace de stockage d'une seule puce ; et
dans lequel par le biais de l'unité de réception et d'émission Bluetooth (22), le module Bluetooth (2) reçoit les paquets de données Bluetooth de l'antenne Bluetooth (24), après traitement de la pile de protocoles dans l'unité de commande (21), transmet les données au terminal mobile (1), ou reçoit les données du terminal mobile (1) puis les encapsulant sous forme de paquets de données Bluetooth, la transmission vers l'unité de réception et d'émission Bluetooth (22) par le biais de l'antenne Bluetooth (24) ;
le terminal mobile (1) comprend en outre un pilote d'un système d'exploitation intégré, le pilote s'exécute à l'intérieur du système d'exploitation du terminal mobile (1), qui prend spécifiquement en charge la réception des exigences d'un programme d'application, encapsulant les exigences dans le paquet de données, puis les transmettant au module Bluetooth (2) par le biais du module d'interface (3), ou recevant une notification du module Bluetooth (2) et envoyant la notification à l'application de couche supérieure exécutée dans le terminal mobile (1) ;
sous la commande de l'unité de commande (21), l'unité de réception et d'émission Bluetooth (22) est configurée pour communiquer avec un dispositif maître Bluetooth externe sous la forme d'un dispositif esclave Bluetooth, permettant ainsi au terminal mobile (1) de communiquer avec un dispositif maître Bluetooth externe en mode dispositif esclave.

2. Système selon la revendication 1, dans lequel l'unité d'interface externe (23) et le module d'interface (3) sont des interfaces série.

3. Système selon la revendication 2, dans lequel les interfaces série pourraient être des interfaces série asynchrones, des interfaces périphériques série, un bus d'intégration interne ou l'interface d'entrée et de sortie rapide série.

4. Procédé d'utilisation d'un système d'exploitation intégré pour obtenir une fonction de dispositif esclave Bluetooth, comprenant :
Étape 1 : fourniture d'un module Bluetooth (2), le module Bluetooth (2), au minimum, étant configuré pour travailler en mode de dispositif esclave Bluetooth et pour avoir une pile de protocoles complète de la fonction de dispositif esclave Bluetooth stockée dans une première unité de stockage (211) ;
Étape 2 : connexion du module Bluetooth à un terminal mobile (1) par le biais d'un module d'interface (3), le terminal mobile (1) est un robot intelligent basé sur un système d'exploitation intégré Android ;
Étape 3 : le terminal mobile (1) pilote le module Bluetooth (2) pour faire fonctionner la propre pile de protocoles du module Bluetooth de la fonction de dispositif esclave Bluetooth ;
Étape 4 : le module Bluetooth (2) effectue la communication de données avec le terminal mobile (1) par le biais du module d'interface (3), dans lequel la pile de protocoles d'interface est stockée dans une deuxième unité de stockage (212) du module Bluetooth (2), dans lequel la première unité de stockage (211) et la deuxième unité de stockage (212) sont formées dans l'espace de stockage d'une seule puce ;
dans lequel par le biais de l'unité de réception et d'émission Bluetooth (22), le module Bluetooth (2) reçoit les paquets de données Bluetooth de l'antenne Bluetooth (24), après traitement de la pile de protocoles dans l'unité de commande (21), transmet les données au terminal mobile (1), ou reçoit les données du terminal mobile (1) puis les encapsulant sous forme de paquets de données Bluetooth, la transmission vers l'unité de réception et d'émission Bluetooth (22) par le biais de l'antenne Bluetooth (24) ;
le terminal mobile (1) comprend en outre un pilote d'un système d'exploitation intégré, le pilote s'exécute à l'intérieur du système d'exploitation du terminal mobile (1), qui prend spécifiquement en charge la réception des exigences d'un programme d'application, encapsulant les exigences dans le paquet de données, puis les transmettant au module Bluetooth (2) par le biais du module d'interface (3), ou recevant une notification du module Bluetooth (2) et envoyant la notification à l'application de couche supérieure exécutée dans le terminal mobile (1) ;
sous la commande de l'unité de commande (21), l'unité de réception et d'émission Bluetooth (22) communique avec un dispositif maître Bluetooth externe sous la forme d'un dispositif esclave Bluetooth, permettant ainsi au terminal mobile (1) de communiquer avec un dispositif maître Bluetooth externe en mode dispositif esclave ;
dans lequel la pile de protocoles complète inclut un profil de distribution audio avancé, A2DP, Profil mains libres, HFP, ou Profil de commande à distance audio/vidéo, AVRCP, fonction de dispositif esclave Bluetooth.

5. Procédé selon la revendication 4, dans lequel le module d'interface est une interface série.
